# EUROPEAN PATENT APPLICATION

(11) **EP 0 958 857 A1**
(43) Date of publication of application: **24.11.1999**
(21) Application number: 98430011.1
(22) Date of filing: 14.05.1998
(51) Int. Cl.: B01J 8/00, C08F 10/00, C08F 2/34

(54) **Process for the introduction of a catalyst into a gas phase polymerisation reaction**

(71) Applicant: BP CHEMICALS S.N.C., 92400 Courbevoie (FR)
(72) Inventor: Chinh, Jean-Claude, 13920 Saint Mitre les Remparts (FR)
(74) Representative: De Kezel, Eric

(57) **Abstract**

The present invention relates to an apparatus and a process for introducing a solid into a reactor utilising a feed enclosure connected to the reactor via an injection pipe, said process comprising:
(a) introducing the solid into the feed enclosure wherein most of the solid settles at rest, and
(b) introducing a gas into the feed enclosure so that the solid initially at rest is dispersed in the gas to form a suspension of solid in gas which is subsequently conveyed from the feed enclosure through the injection pipe and into the reactor,
characterised in that the gas is introduced into the feed enclosure from below the solid settled at rest in the feed enclosure.

## Description

The present invention relates to a process for introducing a solid into a reactor and in particular for introducing a catalytically active solid into a reactor. It also relates to an apparatus for carrying out said process.

French Patent Application n° 2,562,077 discloses a process and an apparatus for introducing a powdery catalyst into a fluidised bed reactor for the gas phase polymerisation of olefins. The catalyst powder is conveyed into the reactor in the form of a dense and compacted powder, i.e. in 'plug flow' or 'packed bed' mode. Such 'plug flow' or 'packed bed' flow generally results in poor dispersion of the catalyst inside the reactor causing the formation of hot-spots, and possibly agglomeration of polymer, which may lead to termination of the reaction.

French Patent Application n° 2,705,252 discloses a process for introducing a solid into a reactor wherein the solid is first introduced into a feed enclosure and subsequently, on introduction of a gas into the feed enclosure, is suspended in the gas. The gas is introduced into the feed enclosure above the uppermost level of the solid.

A process and apparatus have now been found for introducing a solid into a reactor without the abovementioned drawbacks, i.e. a process and apparatus which provide for improved entry of the solid into the reactor and which also provide for improved dispersion of the solid in the reactor, particularly when a gas phase reactor such as a fluidised bed reactor is used.

Accordingly, the present invention provides a process for introducing a solid into a reactor utilising a feed enclosure connected to the reactor via an injection pipe, said process comprising:
(a) introducing the solid into the feed enclosure wherein most of the solid settles at rest, and
(b) introducing a gas into the feed enclosure so that the solid initially at rest is dispersed in the gas to form a suspension of solid in gas which is subsequently conveyed from the feed enclosure through the injection pipe and into the reactor,
characterised in that the gas is introduced into the feed enclosure from below the solid settled at rest in the feed enclosure.

During the first stage of the process, the solid is introduced into a feed enclosure. The introduction of solid is preferably performed through the upper part and in most cases through the top of the feed enclosure. The solid may be delivered into the feed enclosure by a pneumatic transport through a gas/solid separator e.g. a cyclone or by a storage vessel through a delivery means e.g. a feed valve or a rotary valve. More particularly, the solid may be delivered by a gravity flow into the feed enclosure, e.g. from the upper part or the top of the feed enclosure to the bottom of said feed enclosure. During this stage the feed enclosure may contain an initial gas under pressure e.g. from 0.15 to 6.5 MPa. The initial gas is generally an inert gas such as nitrogen. When the process of the present invention is operated sequentially, the gas initially present in the feed enclosure during the first stage is that gas remaining in the feed enclosure at the end of the second stage of the preceding process sequence. The feed enclosure generally has a volume which is greater than the volume of solid introduced and which represents advantageously from 2 to 20, preferably from 3 to 10 times the volume of solid to be introduced. The volume of the feed enclosure is chosen so as to make it easily possible to suspend the solid in gas during the second stage of the process.

During the first stage of the process most of the solid introduced into the feed enclosure settles at rest in the feed enclosure, particularly by gravity flow, in the lower part of the feed enclosure e.g. on the bottom surface of the feed enclosure. Most of the solid settles in the feed enclosure where it is capable of being dispersed and suspended in the gas during the second stage of the process. Some of the solid may settle externally to the feed enclosure, e.g. in the gas introduction pipe.

During the second stage of the process, the solid initially at rest in the feed enclosure is dispersed in the gas to form a suspension of solid in gas and is subsequently conveyed from the feed enclosure through the injection pipe into the reactor. Gas is introduced into the feed enclosure containing the solid at rest. When the reactor is under relatively high pressure, the injection pipe is generally provided with an entry means e.g. an entry valve, which is opened in order to bring the feed enclosure into communication with the reactor via the injection pipe. Preferably, when the desired amount of the solid has been introduced into the reactor, the entry means is closed until the beginning of the next cycle of solid introduction, particularly if the content of the reactor may react or interact with the solid. Gas may be introduced into the feed enclosure by the opening of a valve and is advantageously introduced continuously throughout the second stage, in particular, from at least the time when the entry means is opened to the end of the introduction of the solid into the reactor. For this purpose the opening of the entry means can be performed simultaneously with the beginning of the introduction of the gas e.g. the opening of a gas introduction valve, or afterwards, preferably immediately after, e.g. less than 1 second or from 1 to 5 seconds after the beginning of the introduction of the gas. The opening of the entry means is advantageously control-driven using the beginning of the introduction of the gas into the feed enclosure or the opening of the gas introduction valve.

Gas is introduced into the feed enclosure, from a point below the solid settled at rest in the feed enclosure, e.g. from below the lowest level of the settled solid. Preferably, the gas may be introduced into the feed enclosure via, for example, a gas introduction pipe, which may be connected at one end to the lower part, preferably the lowest part of the feed enclosure. According to the present invention for most of the second stage, a stream of gas, which is preferably continuous, flows from the point of introduction of the gas into the feed enclosure through the injection pipe to the reactor. The introduction of the gas into the feed enclosure and its flow in the feed enclosure is such that the solid initially at rest in the feed enclosure is dispersed by the gas to form a suspension of the solid in the gas. The solid suspension is then conveyed by the gas from the feed enclosure through the injection pipe and into the reactor. The injection pipe is preferably connected to the outlet of the feed enclosure from a point above the solid settled at rest in the feed enclosure, more preferably to the upper part of the feed enclosure.

According to a preferred embodiment of the present invention the gas is introduced into the feed enclosure in a manner e.g. in a direction, which creates a swirling motion of the gas within the feed enclosure. The swirling motion of the gas assists in the dispersion of the solid initially settled in the feed enclosure in the gas to form a suspension of the solid in the gas, and also in diluting and homogenising the solid in the suspension to form a uniform flow regime.

The dilution of the solid by the gas is generally such that from 1 to 15 kg, preferably 2 to 10 kg, especially from 3 to 5 kg of gas is introduced into the feed enclosure per one kg of solid.

The gas introduced into the feed enclosure is generally introduced at a pressure higher than the pressure in the reactor, e.g. a pressure of 0.05 to 1.5 MPa, preferably 0.1 to 1.0 MPa higher than the pressure in the reactor. In particular, the pressure of the gas introduced into the feed enclosure is from 0.15 to 6.5 MPa, preferably from 0.2 to 6 Mpa, while the pressure in the reactor may be from 0.1 to 5 Mpa. The gas is preferably inert towards the solid and, in particular, may be nitrogen.

Preferably, before the total dosage of solid has been introduced into the reactor, the gas pressure in the feed enclosure is maintained at a higher pressure than that in the reactor and is maintained substantially constant, bearing in mind the continuous introduction of gas during the second stage of the process After the total dosage of the solid has been introduced into the reactor it is preferable that the gas pressure in the feed enclosure does not become equal to or lower than that in the reactor, in order to avoid a possible backflow of the gas from the reactor towards the feed enclosure through the injection pipe.

At the end of the second stage, when the introduction of solid into the reactor is completed, the entry means may be closed. Closing of the entry means may be ideally performed immediately after introduction of solid into the reactor has been completed, in order to limit the quantity of gas introduced into the reactor. In addition, the introduction of gas into the feed enclosure is also terminated. The termination may be performed simultaneously with the closure of the entry means or immediately after, e.g. less than 1 second or from 1 to 5 seconds after closure of the entry means. Advantageously, the termination of gas introduction into the feed enclosure is synchronised with closure of the entry means.

The duration of the second stage of the process may be very fast and can be less than 1 second or from 1 to 10 seconds, e.g. from 2 to 5 seconds.

The two stages of the process of the present invention constitute a process cycle the total duration of which may be very fast, for example, less than 1 second, preferably, from 1 to 30 seconds, e.g. from 5 to 15 seconds in industrial plants. To introduce a larger quantity of solid into the reactor, the process cycle may be repeated a number of times, at regular intervals. In particular, up to 240 solid injections per hour on current cycle.

The present invention also provides for an apparatus for introducing a solid into a reactor (14) preferably under a relatively high pressure, the apparatus consisting essentially of a feed enclosure (7) which comprises:
- a means (4) for introducing the solid into the feed enclosure (7),
- an outlet (8) for an injection pipe (10),connected to the reactor (14),
- an inlet of a gas introduction pipe (16) making it possible to disperse the solid settled at rest in the feed enclosure (7) in the gas forming a suspension of the solid in the gas and conveying it through the injection pipe (10) into the reactor (14), and
- a means (11) making it possible to avoid a gravity flow of most of the solid present in the feed enclosure (7) into the gas introduction pipe (16).

The apparatus may include a storage enclosure (1), which may be of a vertical cylindrical shape, the lowest part (2) of which may advantageously be of a conical shape oriented downwards. In industrial plants the storage enclosure usually has a relatively large volume such that solid may be fed to the reactor over a period ranging from 0.5 to 5 days. The solid in the enclosure may preferably be stored under an inert atmosphere.

The means (4) for introducing solid into the feed enclosure (7) may consist essentially of a rotary valve comprising a cavity (5) which can communicate alternately with the lowest part (2) of the storage enclosure (1) and with the top (6) of the feed enclosure (7). As example, the rotary valve (4) may be one of the rotary valves described in French Patents No. 2,562,077 and No. 2,587,081.

The feed enclosure (7) may comprise any suitable vessel but preferably comprises a vertical cylindrical upper part adjacent to a conical lower part oriented downwards. The gas introduction pipe (16) may preferably be connected to the lower part and in particular to the lowest part of the feed enclosure (7) and may preferably have a gas introduction valve (15). When the lower part of the feed enclosure consists of a downwards oriented cone, the gas introduction pipe (16) is advantageously connected to the apex of this cone. In a highly advantageous manner the inlet of the gas introduction pipe (16) in the feed enclosure (7) is arranged, e.g. oriented, in a such way that the solid settled at rest in the feed enclosure (7) is suspended in the gas by a swirling motion in the feed enclosure (7). The feed enclosure (7) is preferably located below the storage enclosure (1). The feed enclosure (7) may be provided with a means for purging gas, such as a purge conduit.

The apparatus preferably includes an entry means (13) when the reactor operates under a relatively high pressure. The entry means (13), when open, allows passage of solid from the feed enclosure (7) to the reactor (14) via the injection pipe (10). Conversely, when the entry means (13) is closed, the feed enclosure (7) is isolated from the reactor (14). The entry means (13) is preferably located in the injection pipe (10), preferably near or at the end of the injection pipe, for example, just before the opening of the injection pipe (10) into the reactor (14). The entry means (13) may be, for example, a fast speed fill-bore valve or a blow off valve.

The injection pipe (10) connects the outlet (8) of the feed enclosure to the reactor (14). The outlet (8) of the feed enclosure is preferably located above the level of the solid settled at rest in the feed enclosure (7), more preferably in the upper part of the feed enclosure (7). One end of the injection pipe (10) may open into the feed enclosure (7) in a direction which may be tangential or substantially tangential to the wall of the feed enclosure (7). The other end of the injection pipe (10) may open into the reactor (14) in a direction which may be perpendicular or substantially perpendicular to the wall of the reactor, or in an upwards or a downwards direction which may form with the horizontal plane an angle up to 60°, preferably from 10 to 45°. It preferably opens into the reactor in a direction which is perpendicular or substantially perpendicular to the wall of the reactor. It preferably enters the reactor (14). The injection pipe (10) is preferably designed for providing a dilute-phase conveying system working preferably under relatively high pressure e.g. from 0.15 to 6.5 MPa with a solid generally consisting of very fine particles e.g. with a mean diameter from 5 to 200 or 10 to 120 microns. In these particular conditions, the internal diameter of the injection pipe (10) maybe in the range from 1 to 25 mm, preferably from 5 to 15 mm.

The apparatus includes a means (11) which makes it possible to avoid, preferably, almost totally, gravity flow of most of the solid present in the feed enclosure (7) into the gas introduction pipe (16). The means (11) is preferably situated in the gas introduction pipe (16) in the proximity, preferably immediate proximity of the inlet (9) of the feed enclosure (7). It is preferably positioned in a such way that its connects the inlet of the feed enclosure with the gas introduction pipe (16). The means (11) may be a valve e.g. an entry valve. The means (11) may also comprise a bend which is preferably situated just at the inlet of the feed enclosure (7) and which is also connected to the gas introduction pipe (16). The angle of the bend (11) depends to a large extent on the ability of the solid to flow by gravity in the gas introduction pipe. The more easily the solid flows by gravity, the smaller the angle which is required. The angle of the bend may generally be from 70 to 120° and is usually about 90°.

The apparatus may advantageously include a control system whereby the opening of the entry means (13) is controlled by the beginning of introduction of gas into the feed enclosure (7) and/or whereby the closure of the entry means (13) is controlled on completion of gas introduction.

The reactor (14) may be a gas phase reactor such as a fluidised bed and/or a mechanically stirred bed reactor. It may be under pressure, especially of from 0.1 to 5 MPa. The reactor may be used for polymerising olefins.

The present invention makes it possible to introduce into a reactor, in particular under a relatively high pressure, a solid in suspension in gas. It can also be used for introducing a solid which has relatively poor flow properties. A test for determining the flowability of a powder is described in EP-A-275675. The present invention is particularly useful for powders which can flow freely in a hopper similar to those described in EP-A-275675, especially in a hopper having the following features: the bottom opening diameter of 5 mm, the top opening diameter of 40 mm and the height of 67.5 mm. Furthermore, the present invention is highly recommended for introducing small quantities of solid into a reactor. In particular, it is very easily possible to introduce from 1 to 100, in most cases from 1 to 50 g of solid per injection sequence. The solid may be a powder consisting of fine or very fine particles having a mass-mean diameter of 5 to 200 microns, preferably 10 to 120 microns, especially 40 to 120 microns. The solid may have a bulk density of 0.1 to 0.6 g/cm³, e.g 0.2 to 0.4 g/cm³.

According to the present invention, the velocity of the gas flowing in the injection pipe to form a dilute-phase conveying system with a uniform flow regime must preferably be higher than the "saltation velocity", e g. it is preferably between 1 and 50 m/sec, and is especially in the range from 5 to 30 m/sec

The solid may be a catalyst for a chemical reaction and in particular a catalyst for an olefin polymerization reaction such as, for example, a catalyst of the Ziegler-Natta type or a metallocene catalyst or a catalyst based on chromium oxide activated by thermal treatment, or a prepolymer containing one of these catalysts.

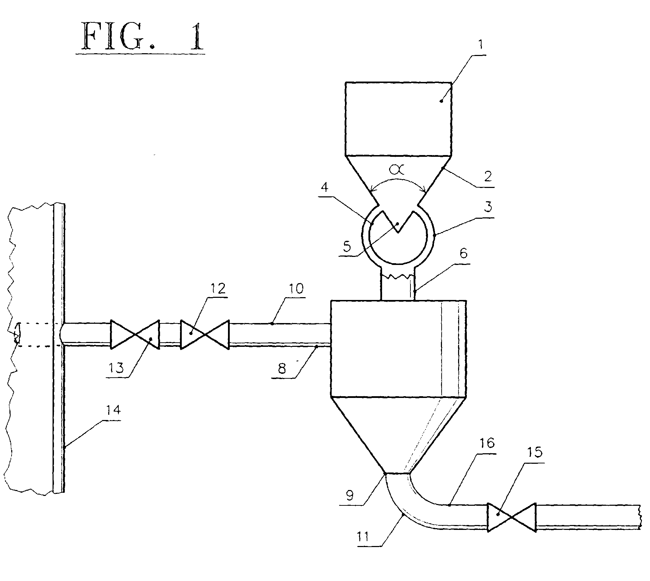

Figure 1 shows diagrammatically an apparatus according to the invention. It consists of a storage enclosure (1) consisting of a vertical cylinder adjacent to a truncated cone in its lower part having at its virtual apex an angle α preferably around 30°. The bottom of the storage enclosure is connected to the top of an introduction chamber (3) containing a rotary valve (4) comprising a cavity (5). The bottom of the introduction chamber (3) is connected to the entry (6) of a feed enclosure (7) equipped with a gas introduction conduit (16). The feed enclosure (7) comprises a cylindrical upper part (7) adjacent to a conical lower pan which ends with an inlet (9). The inlet (9) of the feed enclosure is connected to the gas introduction pipe (16). The gas introduction pipe (16) comprises a bend (11) having an angle of 90°, adjacent to the inlet (9). The outlet (8) of the feed enclosure (7) is connected to a reactor (14) through an injection pipe (10) which is provided with a blow off valve (13) and a isolation valve (12) and which opens into the reactor (14).

The following examples illustrate the present invention.

### Example 1

The operation was carried out with an apparatus identical to that shown in Figure 1. The angle α of the virtual apex of the truncated cone (2) of the storage enclosure (1) was 30°. The dimensions of the rotary valve were such that the volume of the cavity (5) of the rotary valve was 1.9 cm³.

The feed enclosure (7) consisted of a cylindrical part which had a diameter of 25 mm and a height of 54 mm, and of a conical part which had a height of 15 mm and which ended with an inlet (9) having a diameter of 8 mm. The volume of the feed enclosure (7) was 30 cm³. The injection pipe (10) had an internal diameter of 6 mm and a length of 2 m. The connection between the inlet (9) and the gas introduction pipe (16) consisted of a bend (11) which had an angle of 90°.

The solid used in the present apparatus was a Ziegler-Natta catalyst identical to the solid (S) prepared in Example 1 of EP-A- 0 529 977, apart from the fact that it was a silica powder sold by JOSEPH CROSFIELD AND SONS (Great Britain) under the trade designation "ES 70" ® instead of the silica powder "SG 332" ® from GRACE. The catalyst consisted of solid particles having a mean diameter of 45 microns and a bulk density of 0.32 g/cm³ and characterised by the above-mentioned flowability test wherein the catalyst flowed freely through the hopper.

The catalyst was introduced into a fluidised bed reactor (14) identical to those described in the Figure of EP-A-529977 wherein a gas phase polymerisation of ethylene was carried out.

The introduction of the catalyst was carried out into the fluidised-bed reactor (14) maintained at a pressure of 1.9 MPa. 0.6 g of the catalyst were introduced into the feed enclosure (7) at a nitrogen pressure of 1.9 MPa, the cavity (5) of the rotary valve (4) being brought into communication with the storage enclosure (1) and then with the feed enclosure (7). This introduction having been done, nitrogen was introduced by opening the valve (15) through the gas introduction pipe (16), originating from a source which was at an initial pressure of 2.3 MPa. The isolation valve (12) was permanently opened. Simultaneously to the opening of the valve (15), the blow off valve (13) was opened. The introduction and the circulation of nitrogen in the feed enclosure (7) made it possible to suspend and to disperse the catalyst in the stream of nitrogen and to create a swirling of catalyst particles which were then conveyed into the reactor through the injection pipe (10) in a dilute-phase conveying system. The velocity of nitrogen was about 15 m/sec in the injection pipe (10). As soon as the catalyst was introduced into the reactor (14) the blow off valve (13) was closed, and simultaneously the valve (15) was closed. The introduction sequence lasted 1 second and was repeated 10 times per hour.
The time taken for the passage of the solids into the reactor was measured by an electrostatic probe placed on the injection line at the inlet of the reactor. The average time taken for solids passage was 0.35 second.

### Comparative Example

Comparative tests were carried out by repeating Example 1 above but using an apparatus as described in the Example of FR-2,705,252 and employing the same parameters as in Example 1.
The average time taken for solids passage was 0.17 second, i.e. less than 50% of the time taken in the hereabove first example. This means that the dispersion parameter according to the present invention example increased by 51 %, as characterised by the time taken to pass the totality of solids into the reactor This result shows that the process and apparatus of the present invention provide improved dispersion of catalyst in a reactor.

## Claims

1. Process for introducing a solid into a reactor utilising a feed enclosure connected to the reactor via an injection pipe, said process comprising:
(a) introducing the solid into the feed enclosure wherein most of the solid settles at rest, and
(b) introducing a gas into the feed enclosure so that the solid initially at rest is dispersed in the gas to form a suspension of the solid in the gas which is subsequently conveyed from the feed enclosure through the injection pipe and into the reactor,
characterised in that the gas is introduced into the feed enclosure from below the solid settled at rest in the feed enclosure.

2. Process according to Claim 1, characterised in that the gas is introduced into the feed enclosure so that a swirling motion of the gas is produced in the feed enclosure suitable for dispersing the solid in the gas.

3. Process according to any one of Claims 1 to 2, characterised in that the injection pipe is provided with an entry means, and the opening of said entry means, which brings the feed enclosure into communication with the reactor via the injection pipe, is performed simultaneously with or immediately after the beginning of the introduction of the gas into the feed enclosure.

4. Process according to any one of Claims 1 to 3, characterised in that the injection pipe is provided with an entry means, and the closure of the said entry means, which isolates the feed enclosure from the reactor, is performed immediately after the end of the introduction of the solid into the reactor and simultaneously with or immediately before the termination of the introduction of gas into the feed enclosure.

5. Process according to any one of Claims 1 to 4, characterised in that the solid is a catalyst for olefin polymerisation and the reactor is a gas phase polymerisation reactor containing a fluidised bed and/or a mechanically stirred-bed under a pressure from 0.1 to 5 MPa.

6. Process according to claim 5 characterised in that the olefin polymerisation catalyst is a metallocene catalyst or of the Ziegler-Natta type.

7. Apparatus for introducing a solid into a reactor (14), the apparatus consisting essentially of a feed enclosure (7) comprising:
- a means (4) for introducing the solid into the feed enclosure (7),
- an outlet (8) for an injection pipe (10) connected to the reactor (14),
- an inlet of a gas introduction conduit (16) making it possible to disperse the solid settled at rest in the feed enclosure (7) in the gas forming a suspension of the solid in the gas and conveying it through the injection pipe (10) into the reactor (14), and
- a means (11) making it possible to avoid a gravity flow of most of the solid present in the feed enclosure (7) into the gas introduction pipe (16).

8. Apparatus according to Claim 7, characterised in that the inlet of the gas introduction conduit (16) is arranged in a such way that the solid settled at rest in the feed enclosure (7) is dispersed in the gas by a swirling motion in said feed enclosure.

9. Apparatus according to Claim 7 or Claim 8 , characterised in that the feed enclosure (7) is a cyclone.

10. Apparatus according to claim 9, characterised in that the inlet of the gas introduction pipe (16) is connected to the apex of the cyclone.
